(19) Europäisches Patentamt

European Patent Office

Office européen des brevets

(11) Publication number: **0 409 593 A1**

## EUROPEAN PATENT APPLICATION

(21) Application number: 90307852.5

(22) Date of filing: 18.07.90

(51) Int. Cl.⁵: **B23B 7/04**

(30) Priority: 20.07.89 JP 189977/89
09.03.90 JP 59370/90

(43) Date of publication of application:
23.01.91 Bulletin 91/04

(84) Designated Contracting States:
CH DE FR GB IT LI

(71) Applicant: TEIJIN SEIKI CO. Ltd.
9-1 Edobori 1-chome Nishi-ku
Osaka-shi Osaka-fu(JP)

(72) Inventor: Togawa, Hirotoshi
10-22, Ogata 1-chome
Otake-shi, Hiroshima-ken(JP)

(74) Representative: Pacitti, Pierpaolo A.M.E. et al
Murgitroyd and Company Mitchell House 333
Bath Street
Glasgow G2 4ER Scotland(GB)

(54) Turret-lathe machining method and apparatus therefor.

(57) In a turret lathe which comprises a turret head (4) in which cutting tools are held, a servo motor (11) for driving said turret head (4), command-signal setting means (34) for generating a command signal by which the dividing position of said turret head (4) is set to any desired position, deviation-signal generating means (36) for generating a deviation signal between said command signal and a feedback signal from an output part of said servo motor (11), and a servo-motor drive circuit (35) for driving said servo motor (11) in response to said deviation signal, a workpiece is machined, while the turret head is locked by servo locking the servo motor.

**FIG. 1**

EP 0 409 593 A1

# TURRET-LATHE MACHINING METHOD AND APPARATUS THEREFOR

## FIELD OF THE INVENTION

The present invention relates to a turret-lathe machining method and a turret lathe for carrying out the machining method.

## DESCRIPTION OF THE PRIOR ART

In a conventional turret-head drive apparatus of turret lathes, a machining operation is performed in the condition in which the turret head is firmly locked to the tool post. For this reason the turret head and the tool post are firmly coupled together through a cap ring with teeth or similar member.

In the turret-head drive apparatus disclosed in Japanese patent laid-open publication No. 64-40206, a servo motor is used in the dividing of the turret head, and a flat surface is cut away with end mills mounted in the turret head, while the turret head is rotated successively by the servo motor. Although in this drive apparatus the servo motor is used in the dividing of the turret head, the turret head is also locked through a cap ring with teeth to the tool post, when a machining operation is performed.

Thus, in the conventional turret-head drive apparatuses, the turret head and the tool post are coupled together with the aid of the cap ring with teeth. Consequently, the cutting tool of the turret head cannot be held in any desired position. For this reason it is impossible to finely adjust the position of the blade edge of the cutting tool mounted in the turret head in relation to the workpiece, and therefore the turret lathe undergoes a limitation by a work accuracy. In addition, the apparatus is bulky and expensive, since the rigidity of the overall apparatus is large to increase the work accuracy. Furthermore, when a load of cut varies due to the ununiformaty of work material, the blade edge of the cutting tool tends to be damaged, since the machining operation is performed in the condition that the turret head is firmly locked to the tool post.

It is therefore an object of the present invention to provide a novel turret-lathe machining method and apparatus therefor which can adjust the position of the cutting tool finely in relation to the workpiece and which can prevent the cutting tool from being damaged even when the cutting load varies.

## SUMMARY OF THE INVENTION

In order to achieve the foregoing object, in a turret lathe which comprises a turret head in which cutting tools are held, a servo motor for driving the turret head, command-signal setting means for generating a command signal by which the dividing position of the turret head is set to any desired position, deviation-signal generating means for generating a deviation signal between the command signal and a feedback signal from an output part of the servo motor, and a servo-motor drive circuit for driving the servo motor in response to the deviation signal, a machining method according to the present invention comprises the step of machining a workpiece, while the turret head is locked by servo locking the servo motor.

The foregoing object is also achieved in accordance with the present invention by providing a turret-head drive apparatus of a turret lathe which comprises:
a turret head in which cutting tools are held;
a servo motor for driving the turret head;
command-signal setting means for generating a command signal by which the dividing position of the turret head is set to any desired position;
deviation-signal generating means for generating a deviation signal between the command signal and a feedback signal from an output part of the servo motor;
a servo-motor drive circuit for driving the servo motor in response to the deviation signal;
a plano-centric planetary-gear speed reducer provided between the turret head and the servo motor, rotation of the servo motor being reduced and transmitted to the turret head by the speed reducer; and
an axis of rotation of the turret head being axially aligned with an axis of rotation of the output part of the servo motor and each axis of rotation of input and output parts of the speed reducer.

In the turret lathe, which comprises a turret head in which cutting tools are held, a servo motor for driving the turret head, command-signal setting means for generating a command signal by which the dividing position of the turret head is set to any desired position, deviation-signal generating means for generating a deviation signal between the command signal and a feedback signal from an output part of the servo motor, a servo-motor drive circuit for driving the servo motor in response to the deviation signal, and a plano-centric planetary-gear speed reducer provided between the turret head and the servo motor, a workpiece is machined by the cutting tool, while the turret head is locked by servo locking the servo motor. Therefore, in the present invention, a force locking the turret head is automatically adjusted according to the magnitude of the cutting load. When the cutting load is rapidly increased, the turret head is slightly rotated through the cutting tool, and therefore the cutting tool is moved away from the workpiece. Consequently, damages to the cutting tool by the rapid increase in the cutting load can be prevented from occurring.

In addition, in machining, the position of rotation of the turret head is set to any desired position so that the depth of cut of the cutting tool can be finely adjusted in relation to the workpiece. Consequently, an accurate machining operation is performed.

In addition, in the turret-head drive apparatus of the turret lathe for carrying out the machining method, the plano-centric planetary-gear speed reducer, which reduces the rotational output of the servo motor and transmits the reduced rotation to the turret head, is provided between the turret head and the servo motor, and the axis of rotation of the turret head is axially aligned with the axis of rotation of the output part of the servo motor and each axis of rotation of input and output parts of the speed reducer. Consequently, the turret lathe can be made structurally simple in accordance with the present invention.

## BRIEF DESCRIPTION OF THE DRAWINGS

The above and other objects and advantages will become apparent from the following detailed description when read in conjunction with the accompanying drawings wherein:

FIG. 1 is a diagram used to explain a fine adjustment of the depth of cut by a turret lathe according to the present invention;

FIG. 2 is a fragmentary plan view showing the workpiece and the cutting tool;

FIG. 3 is a perspective view showing the turret head in which the cutting tools are held;

FIG. 4 is a sectional view of the swivel drive mechanism;

FIG. 5 is a cross sectional view taken substantially along line V-V of FIG. 4;

FIG. 6 is a block diagram showing a control system of the servo motor; and

FIG. 7 is a sectional view showing a swivel drive mechanism according to another embodiment of the present invention.

## DESCRIPTION OF THE PREFERRED EMBODIMENTS

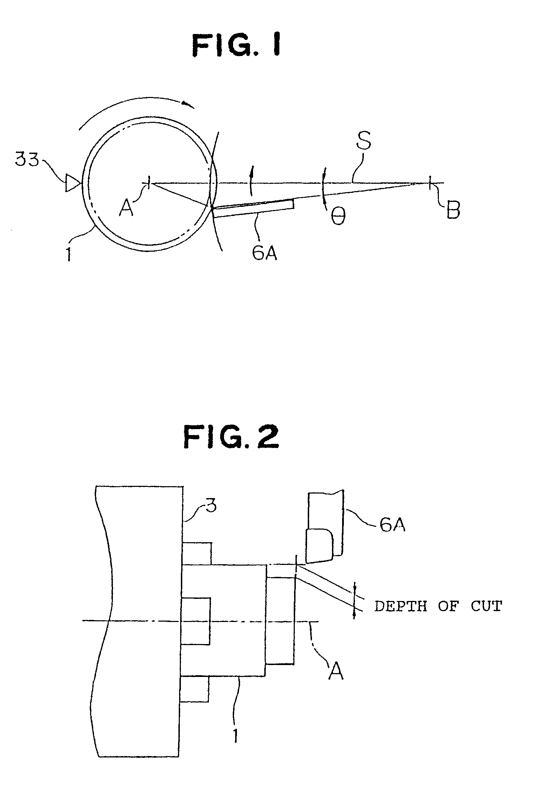

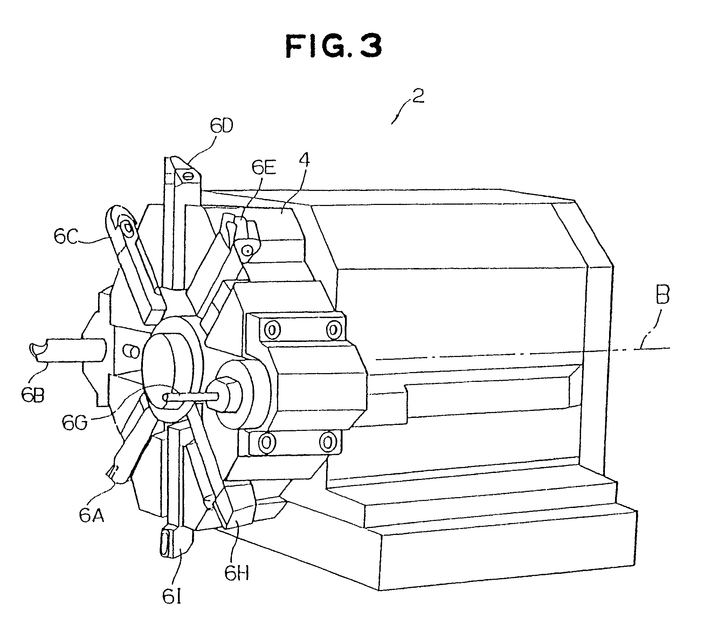

Referring to FIGS. 1 through 6, there is shown a preferred embodiment of a turret-head drive apparatus of a turret lathe for carrying out a turret-lathe machining method according to the present invention.

In FIGS. 1 through 6, reference numeral 1 is a cylindrical workpiece, which is held in a chuck 3 and driven to rotate about an axis A by a work spindle (not shown) mounted in a headstock (not shown). Reference numeral 2 is a turret slide, which has a turret head 4 and a swivel drive mechanism 5. The turret head 4 holds a plurality of cutting tools or boring tools 6A-6I equiangularly in the radial direction of the head 4 or in the direction of a center axis B. The turret head 4 is rotatable about the center axis B extending in parallel relationship with the axis A of the workpiece 1, so that the cutting tools 6A-6I can be rotated and swiveled about the center axis B. The swivel drive mechanism 5 comprises a plano-centric (plano-eccentric) planetary-gear speed reducer 8 and a servo motor 11 which are are coaxially arranged. The plano-centric planetary-gear speed reducer 8 has its output part which is coupled to a circular table 7 coaxially connected to the turret head 4 or a table 7 formed so as to be used as a turret head. The electrically-driven servo motor 11 has a rotational shaft 9, which is connected to the speed reducer 8 and serves as an input part of the speed reducer 8.

The speed reducer 8 is constituted by a primary speed reducing part 8F connected to the rotational shaft 9 (corresponding to the output part of the servo motor 11) and a secondary speed reducing part 8R driving the table 7. The primary speed reducing part 8F comprises a first gear 12, and three second gears 13 which are larger in number of gear teeth than the first gear 12 and disposed equiangularly and mesh with the first gear 12. The second gears 13 are fixedly mounted on cam shafts 16 of the secondary speed reducing part 8R, respectively. The secondary speed reducing part 8R comprises a support block 14 having the servo motor 11 fixedly connected thereto, and the three cam shafts 16 supported equiangularly with respect to the turret-head center axis B. Each cam shaft 16 has opposite end portions 16a and 16b supported by bearings 15A and 15B, and circular eccentric cam portions 16c and 16d which are offset in the opposite directions with respect to the turret-head center axis B by the same distance. The secondary speed reducing part 8R further comprises a pair of externally toothed gears 18A and 18B which are supported through bearings 17A and 17B on the eccentric cam portions 16c and 16d of the three cam shafts 16 so that the gears 18A and 18B can be eccentrically rotated about the turret-head center axis B. The rotation of the cam shafts 16 causes the externally toothed gears 18A and 18B to revolve with different phases of 180° about the turret-head center axis B . The externally toothed gears 18A and 18B have external teeth 18a of the same number of gear teeth and the same tooth profile (for example, cycloidal tooth), and mesh with an internally toothed gear 19 which is slightly larger in number of gear teeth than the externally toothed gears 18A and 18B. When the externally toothed gears 18A and 18B are revolved about the turret-head center axis B, the internally toothed gear 19 rotates in the reverse direction through a very small angle proportional to the difference in number of gear teeth between the external teeth 18a and the internal teeth 19a of the internally toothed gear 19. The internally toothed gear 19 (corresponding to the output part of the speed reducer 8) is formed integrally with the table 7, and freely rotatably supported on the support block 14 through a bearing 21. The internally toothed gear 19 and the table 7 rotate as a single body, and the axis of rotation is axially aligned with the axis of rotation of the rotational shaft 9 of the servo motor 11. That is, the rotation of the servo motor 11 is reduced by the primary speed reducing part 8F of the speed reducer 8, and further reduced by the secondary speed reducing part 8R. This reduced rotation causes the turret head 4 connected to the table 7 or turret head 4 formed integrally with the table 7 to rotate about the turret-head center axis B. Therefore, the swivel drive mechanism 5 rotates the turret head 4, so that the cutting tools 6A-6I are rotated and swiveled about the turret-head center axis B.

Between the table 7 and the support block 14 there is provided a gripping device 24. The gripping device 24 comprises a collet 24 fixed to the support block 14 by a bolt 23, and a cylindrical piston 25 slidably received on the support block 14 and engaging with the gripping portion 24a of the collet 24 to bring the gripping portion 24a into engagement with the hub portion 7b of the table 7. A first annular fluid chamber 26U is defined by the collet 24, the piston 25 and the support block 14, and a second annular fluid chamber 26L is defined between the collet 24 and the piston 25. When fluid under pressure is supplied to the second fluid chamber 26L through a fluid passageway 27L, the piston 25 is moved axially inwards, so that the hub portion 7b of the table 7 and the collet 24 are gripped and connected together. When, on the other hand, fluid under pressure is supplied to the first fluid chamber 26U through a fluid passageway 27U, the piston 25 is moved axially outwards, so that the gripped connection as described above is released.

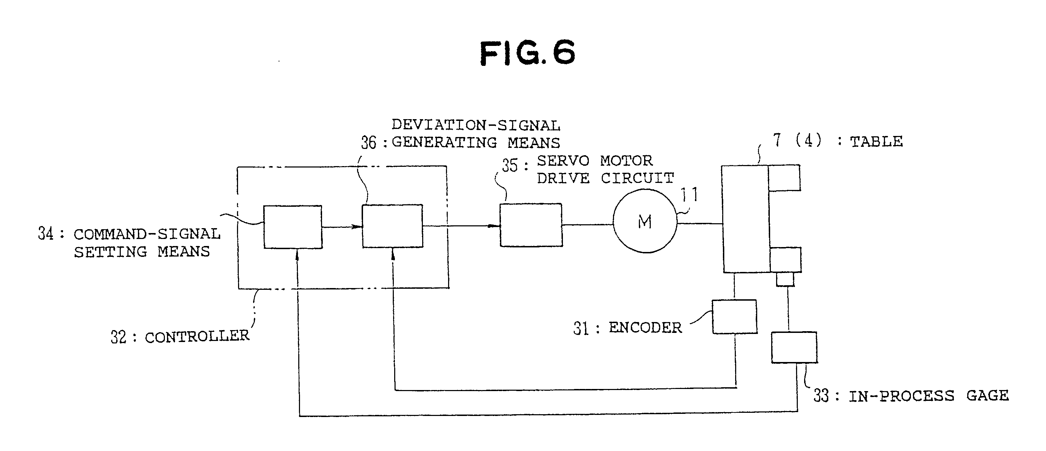

Between the table 7 and the support block 14 there is also provided a magnetic encoder 31 (rotational position sensing means). The encoder 31 generates its output signal proportional to the rotational amount of the table 7, by moving toward and away from a plurality of projections 7a projecting equiangularly from the table 7. The encoder 31 is connected to a controller 32 (control means), which controls the operations of the spindle drive motor of the headstock, the feed mechanism of the turret slide 2, and the swivel drive mechanism 5, in accordance with data inputs from various sensors including a work-condition setting unit (not shown), the encoder 31 and a dimension gage or in-process gage 33 (FIG. 1). The controller 32 comprises a microcomputer, a switch circuit and a power circuit, and performs a work program stored in the internal memory, so that the above described spindle drive motor and feed mechanism are operated in a known manner. That is, as shown in FIG. 6, the control system of the servo motor 11 of the swivel drive mechanism 5 includes command-signal setting means 34 for setting the turret head 4 to any desired position, and deviation-signal generating means 36 for generating a deviation signal between the command signal from the command-signal setting means 34 and the output signal of the encoder 31 as a feedback signal from the output side of the servo motor 11 and for inputting the deviation signal to a drive circuit 35 of the servo motor 11. This control system controls the servo motor 11 in such a manner that one of the cutting tools 6A-6I is rotated toward a machining reference horizontal surface S, which includes the axis A of the workpiece 1 and the turret-head center axis B, to control the dividing of the turret head 4. For example, the cutting tool 6A (or cutting tool 6B) is rotated toward (or away from) the machining reference horizontal surface S so that the depth of cut of the outer peripheral surface (or inner peripheral surface) of the workpiece 1 can be slightly varied. That is, the controller 32 controls the rotation of the workpiece 1 or the feed of the turret 2, and also brings a predetermined cutting tool into engagement with the workpiece 1 at a position adjacent to the machining reference horizontal surface S in response to the output signal of the encoder 31, and slightly rotates the cutting tool so that the blade edge thereof will be moved toward or away from the machining reference horizontal surface S. As a result of this slight rotation, the machining amount is adjusted finely.

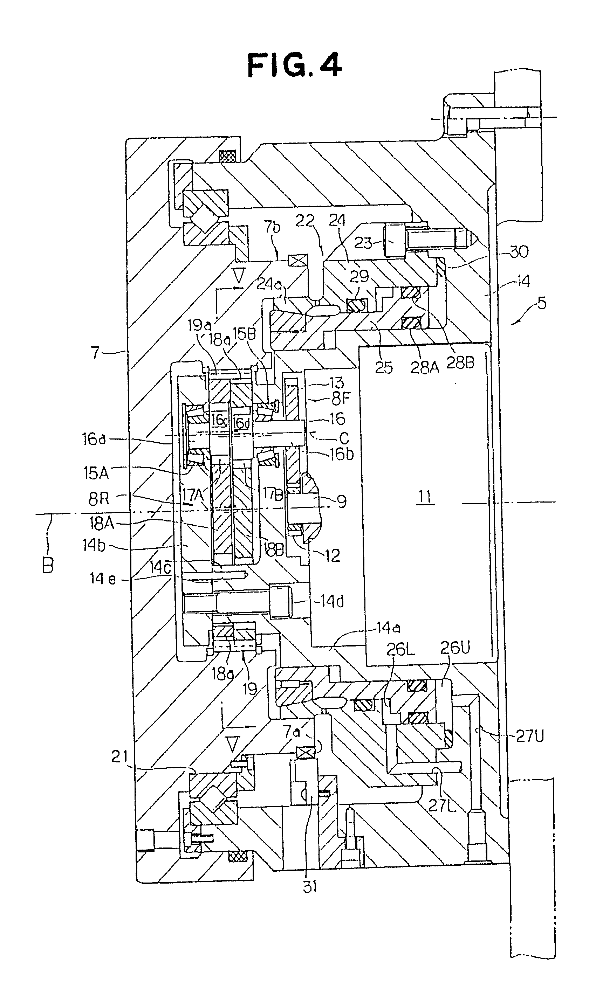

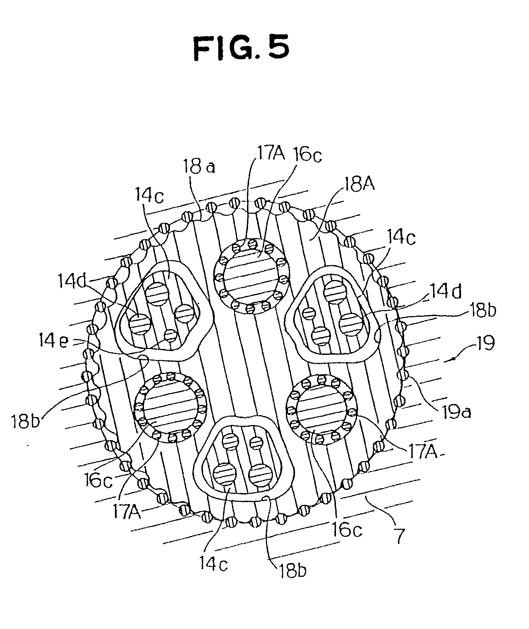

In FIGS. 4 and 5, the support block 14 comprises a main body portion 14a and a plate portion 14b which are located on the opposite sides of the externally toothed gears 18A and 18B, three column portions 14c projecting from the main body portion 14a toward the plate portion 14b and passing through the through bores 18b of the externally toothed gears 18A and 18B, and a plurality of bolts 14d and pins 14e which are inserted into the column portions 14c to connect the main body portion 14a and the plate portion 14b together. Reference numerals 28A, 28B, 29 and 30 denote sealing members, respectively.

The operation of the embodiment as described above will hereinafter be described in detail.

In the preparatory process, the cutting tools 6A-6I are mounted in the turret head 4 and freely rotatably held about the turret-head center axis B. The workpiece 1 is also held in the chuck 3 so that the workpiece 1 can be rotated with the work spindle. In the work process, a predetermined program is performed by the controller 32. In that case, the controller 32 drives the spindle drive means of the headstock to rotate the workpiece 1. After the workpiece 1 has been rotated, the controller 32 drives the feed mechanism to feed the turret slide 2 in the longitudinal or transverse direction of the turret lathe. Furthermore, the controller 32 drives the swivel drive mechanism 5 to control the dividing of the turret head 4. Thereafter, one of the cutting tools 6A-6I is brought into engagement with the workpiece 1 at a position adjacent to the machining reference horizontal surface S, and the machining operation is started.

Assume now that the cutting tool 6A is brought into engagement with the workpiece 1 and the machining operation is started. When the cutting tool 6A is fed transversely by a predetermined amount and the workpiece 1 is machined, the transverse feed of the cutting tool 6A is stopped so that the amount of a depth of cut corresponding to the above described fine adjustment will be left. For roughing cuts and medium cuts, the blade edge of the cutting cool 6A is held in an operating position slightly rotated downwardly from the machining reference horizontal surface S by the very small angle $\theta$ shown in FIG. 1. Thereafter, the turret head 4 is rotated downwardly to move the cutting tool 6A away from the workpiece 1, and then the external diameter of the machined portion of the workpiece 1 is measured by the in-process gage 33, as shown in FIG. 1. The next amount of a depth of cut is then determined. The servo motor 11 is then rotated so that the blade edge of the cutting tool 6A approaches the machining reference horizontal surface S, and therefore the turret head 4 is rotated through a very small angle. This rotation increases the depth amount of cut of the blade edge of the cutting tool 6A to the depth amount of cut as determined above, and causes the cutting tool 6A to be again brought into engagement with the workpiece 1. In this way, the cutting tool 6A is rotated according to the target of the depth amount of cut, and the amount of machining is finely adjusted.

The above described fine adjustment and machining are repeated required times to finish the workpiece 1 to a desired size. The blade edge position at each machining time from the start of machining to the end can be locked by locking the rotation of the turret head 4 by the gripping device 22. However, since in the above case the servo motor 11 is used for driving the turret head 4, the servo lock can be utilized. In the embodiment as described above, the servo lock is employed in normal cutting load conditions. In that case, the reaction force that is exerted on the blade edge of the cutting cool 6A at the time of machining is to be received by the speed reducer 8 and the servo motor 11 by utilizing the irreversibility of the speed reducer 8. In addition, in heavy cutting load conditions, the blade edge position can be locked only by the gripping device 22.

In the case of the cutting tool 6B which is used for machining the inner peripheral surface of the workpiece 1, the workpiece 1 is machined by the blade edge of the cutting tool 6B positioned on the machining reference horizontal surface S, and thereafter the cutting tool 6B is moved longitudinally and removed from the workpiece 1, and the size of the machined part is measured. The cutting tool 6B is then rotated according upwardly to the target dimension of the depth of cut so that the blade edge of the cutting tool 6B will be moved transversely away from the axis A of the workpiece 1. Consequently, the fine adjustment as described above is made.

Since the change in the depth of cut of the workpiece 1 is extremely small with respect to the change in the angle of rotation of the cutting tool 6A or 6B, a desired machining dimension can be easily obtained. In addition, the stepless dividing of the turret head 4 and the fine adjustment of the machining amount can be easily achieved with the aid of the simple swivel drive mechanism 5 comprising the speed reducer 8 and the servo motor 11. Consequently a turret lathe of high accuracy and low cost will be provided.

While in the above embodiment the depth amount of cut of the cutting tools has been adjusted step by step by rotating the turret head 4, it is noted that the turret slide 2 may also be fed at right angles toward the center axis of the work spindle to machine the workpiece 1, while the dividing position of the turret head 4 is locked at all times. In this case, the turret head 4 is also locked by the servo lock.

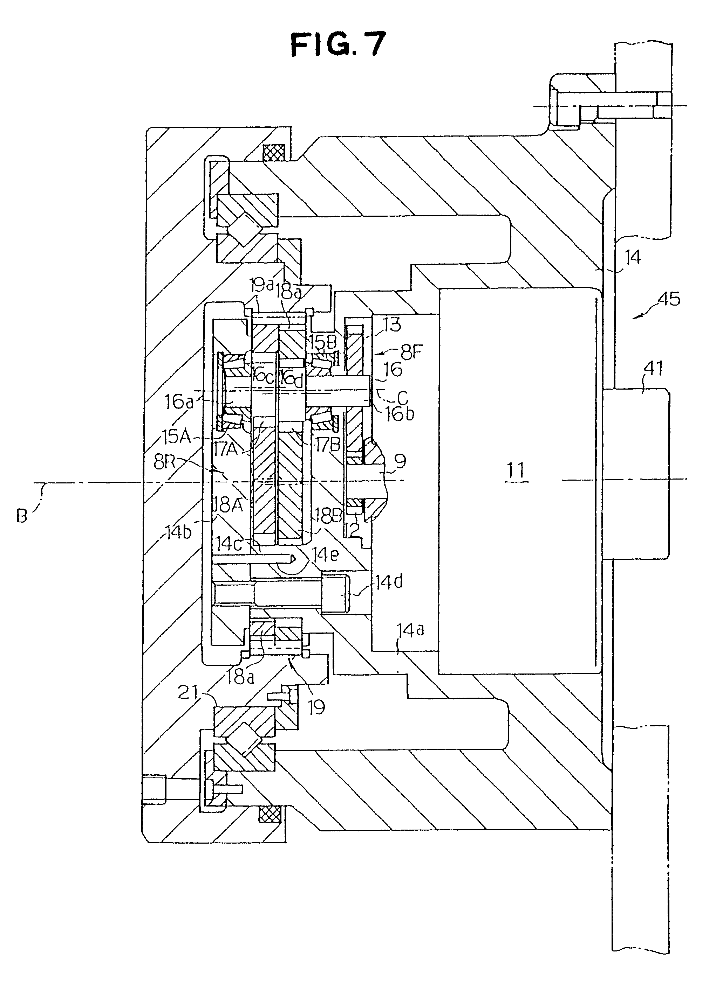

FIG. 7 illustrates another embodiment of the turret-head drive apparatus of the turret lathe for carrying out the machining method according to the present invention. The parts substantially identical with the first embodiment of FIG. 4 will be designated by like reference numerals and therefore a detailed description will not be given. In FIG. 7, a swivel drive mechanism 45 is not provided with a lock mechanism such as the above described gripping device 22. When the rotation of the turret head 4 is locked, a detection signal is always supplied to the above described controller 32 from an encoder 41 (rotational-position sensing means) mounted on a servo motor 11. The above described controller 32 controls the rotational stop position of the servo motor 11 so as to maintain it constant, so that the turret head 4 will be locked by servo lock. This embodiment therefore has its advantages in that the turret lathe is structurally simpler and inexpensive. In addition, as in the case of the embodiment of FIG. 4, the cutting cools can be supported with a rigidity of support balancing with a spindle maximum capability by suitably setting the speed reduction ratio of the speed reducer 8. In the case that a load is excessively increased due to an increase in resistance to cut, the turret head 4 can be moved in the direction in which the resistance to cut is reduced. Furthermore, the controller 32 can also generate a warning signal by sensing an excessive load state from the feedback signal (rotational position signal) from the encoder 41. Consequently, the damages to the workpiece 1, cutting tools and tool holders can be prevented from occurring. In the embodiments as described above, if the angle of rotation $\theta$ shown in FIG. 1 is slightly increased as the cutting tools wear, a correction of wear will be made so that the work dimension can be maintained constant.

While the subject invention has been described with relation to the preferred embodiment thereof, various modifications and adaptations thereof will now be apparent to those skilled in the art. All such modifications and adaptations as fall within the scope of the appended claims are intended to be covered thereby.

## Claims

1. In a turret lathe which comprises a turret head (4) in which cutting tools are held, a servo motor (11) for driving said turret head (4), command-signal setting means (34) for generating a command signal by which the dividing position of said turret head (4) is set to any desired position, deviation-signal generating means (36) for generating a deviation signal between said command signal and a feedback signal from an output part of said servo motor (11), and a servo-motor drive circuit (35) for driving said servo motor (11) in response to said deviation signal, a machining method comprising the step of: machining a workpiece, while the turret head is locked by servo locking the servo motor.

2. A turret-head drive apparatus of a turret lathe comprising:
a turret head (4) in which cutting tools are held;
a servo motor (11) for driving said turret head (4);
command-signal setting means (34) for generating a command signal by which the dividing position of said turret head (4) is set to any desired position;
deviation-signal generating means (36) for generating a deviation signal between said command signal and a feedback signal from an output part of said servo motor (11);
a servo-motor drive circuit (35) for driving said servo motor (11) in response to said deviation signal;
a plano-centric planetary-gear speed reducer (8) provided between said turret head (4) and said servo motor (11), rotation of said servo motor (11) being reduced and transmitted to said turret head (4) by said speed reducer (8); and
an axis of rotation of said turret head (4) being axially aligned with an axis of rotation of the output part of said servo motor (11) and each axis of rotation of input and output parts of said speed reducer (8).

3. A turret-lathe machining method comprising the steps of:
rotating a workpiece (1) about a first axis (A);
holding cutting tools (6A-6I) so that they can be freely rotated about a second axis (B) extending in parallel relationship with said first axis (A);
bringing one of said cutting tools (6A-6I) into engagement with said workpiece (1) at a position adjacent to a machining reference horizontal surface (S) including said first and second axes (A and B), after said workpiece (1) has been rotated; and
rotating said one cutting tool toward and away from said machining reference horizontal surface (S) in such a manner that an amount of machining is finely adjusted according to an angle of rotation of said one cutting tool.

# FIG. I

# FIG. 2

DEPTH OF CUT

# FIG.3

# FIG.4

# FIG. 5

# FIG.6

DEVIATION-SIGNAL
36 : GENERATING MEANS

7 (4) : TABLE

35 : SERVO MOTOR
DRIVE CIRCUIT

11

34 : COMMAND-SIGNAL
SETTING MEANS

32 : CONTROLLER

31 : ENCODER

33 : IN-PROCESS GAGE

EP 0 409 593 A1

# FIG. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | CH - A - 641 071 (TVERSKOI) * Abstract; fig. 2; claim 1 * | 1,2 | B 23 B 7/04 |
| Y | DE - A - 1 777 160 (KEARNEY) * Claims 1,2 * | 1,2 | |
| A | PATENT ABSTRACTS OF JAPAN, unexamined applications, section M, vol. 13, no. 225, May 25, 1989 THE PATENT OFFICE JAPANESE GOVERNMENT page 31 M 830 * Kokai-no. 1-40 206 (CITIZEN) * | 1,2 | |
| A | DE - A - 2 002 563 (THE CINCINNATI) * Fig. 1 * | 3 | TECHNICAL FIELDS SEARCHED (Int. Cl.5) |
| A | DE - A - 1 752 948 (VEB FRITZ-HECKERT-WERK) | | B 23 B 7/00 B 23 Q 5/00 |
| A | DE - C - 971 313 (SCHEK) | | |

The present search report has been drawn up for all claims

| Place of search | Date of completion of the search | Examiner |
|---|---|---|
| VIENNA | 11-10-1990 | RIEDER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

      

& : member of the same patent family, corresponding document

EPO FORM 1503 03.82 (P0401)